# EUROPÄISCHE PATENTSCHRIFT

(11) **EP 1 870 312 B1**
(45) Veröffentlichungstag und Bekanntmachung des Hinweises auf die Patenterteilung: **29.07.2009**
(21) Anmeldenummer: 07110039.0
(22) Anmeldetag: 12.06.2007
(51) Int. Cl.: B62D 5/00

(54) **Überlagerungslenkung**
Superimposed steering system
Direction à superposition

(30) Priorität: 20.06.2006 DE 102006028267
(43) Veröffentlichungstag der Anmeldung: 26.12.2007
(73) Patentinhaber: ZF Lenksysteme GmbH, 73527 Schwäbisch Gmünd (DE)
(72) Erfinder: Kruttschnitt, Andreas, 89522 Heidenheim (DE); Rupp, Arthur, 73460 Hüttlingen (DE); Hörsch, Jürgen, 74417 Gschwend (DE); Truthmann, Steffen, 73525 Schwäbisch Gmünd (DE); Domhan, Achim, 73529 Schwäbisch Gmünd (DE)

(56) Entgegenhaltungen:
- WO-A-20/05054035
- DE-A1- 10 253 465
- DE-U1-2202004 015 55

## Beschreibung

Die Erfindung betrifft eine Überlagerungslenkung für ein Fahrzeug nach dem Oberbegriff des Anspruchs 1.

Überlagerungslenkungen sind bekannt und zeichnen sich dadurch aus, dass dem von einem Fahrer an einer Lenkhandhabe gewählten Lenkwinkel bei Bedarf ein weiterer Drehwinkel durch einen Aktuator überlagert werden kann. Der zusätzliche Drehwinkel wird durch eine elektronische Steuerungs- und/oder Regelungseinrichtung (ESP-Regler) gesteuert und dient zur Erhöhung der Fahrstabilität des Fahrzeugs oder zu sonstigen Zwecken. Beispielsweise wird hierfür ein Überlagerungsgetriebe, das als Planetenradgetriebe, wie es in der DE 101 59 800 A1 oder als Wellgetriebe (harmonic-drive), wie es in der US 6 938 724 B1 offenbart ist, herangezogen.

Die Übersetzung der Servo- oder Hilfskraftlenkung setzt sich aus den Übersetzungen des jeweiligen Lenkgetriebes und des Überlagerungsgetriebes zusammen. Ein Überlagerungsgetriebe weist zu diesem Zweck eine erste Getriebeeingangswelle und eine zweite Getriebeeingangswelle auf und überlagert die an den beiden Getriebeeingangswellen auftretenden Drehwinkel auf eine Getriebeausgangswelle, die mit einem Lenkgetriebe und lenkbaren Rädern des Fahrzeugs wirkverbunden ist.

Soll die Übersetzung beispielsweise aus fahrdynamischen Gründen geändert werden, wird im Fall eines Planetenradgetriebes als Überlagerungsgetriebe der Käfig über einen elektrischen Servomotor angetrieben. Bei einem Well- oder Pulsatorgetriebe wird ein exzentrischer Antriebskern des Wellgetriebes durch einen Servomotor in Drehung versetzt.

Um bei abgeschaltetem Servomotor, etwa bei Ausfall dessen Energieversorgung, eine gute Übersetzung zu realisieren und nicht den an einer Lenkhandhabe durch den Fahrer auf die erste Getriebeeingangswelle eingegebenen Soll-Lenkwinkel durch einen Leerlauf der mit dem Servomotor wirkverbundenen zweiten Getriebeeingangswelle zu kompensieren, sind Verriegelungseinrichtungen, wie sie etwa in der DE 103 34 057 A1 offenbart ist, bekannt.

Weiterhin ist aus WO 2005 05 4035 A1 eine als Wellgetriebe ausgebildete Überlagerungslenkung bekannt.

Die bekannten Wellgetriebe, die als Überlagerungsgetriebe eingesetzt sind, und die bekannten Verriegelungseinrichtungen für die Wellgetriebe sind in Bezug auf ihr Betriebsgeräusch nicht optimiert, was unter dem Aspekt, dass diese u.U. im Fahrzeuginnenraum oder an dessen Instrumentenkonsole angeordnet sind, eine Beeinträchtigung des Fahrkomforts bedeuten kann.

Der Erfindung liegt die Aufgabe zugrunde, eine geräuscharme, betriebssichere Überlagerungslenkung vorzuschlagen.

Die Aufgabe wird mit einer Überlagerungslenkung mit den Merkmalen des Anspruchs 1 gelöst.

Dadurch dass ein flexibles Kugellager, welches zwischen einem exzentrischen Antriebskern und einer radialflexiblen Abrollbuchse des Wellgetriebes angeordnet ist durch ein oder mehrere flexible Geräuschdämpfungselemente axial abgedeckt ist, ist eine wichtige Lärmquelle in ihrer Wirkung auf das Betriebsgeräusch der Überlagerungslenkung gedämpft und ein wichtiges Teil der emittierten Schallleistung reduziert. Die erfindungsgemäße Überlagerungslenkung weist außerdem eine Verriegelungseinrichtung auf, deren Schallleistungspfad vom Inneren des Gehäuses von Wellgetriebe und Servomotor nach außen unterbrochen ist. Die Verriegelungseinrichtung ist aus einem Innenring gebildet, der drehfest mit der zweiten Getriebeeingangswelle verbunden ist und einen oder mehrere vorzugsweise radiale Vorsprünge trägt, die unter Zwischenlage eines gräuschdämpfenden Elements mit elastomeren Eigenschaften in eine oder mehrere Ausnehmungen eines den Innenring radial umschlie-ßenden Außenrings eingreifen, wobei der Außenring vorzugsweise an seinem radialen Umfang taschenartige Vertiefungen mit ein oder mehreren Vorsprüngen aufweist, die als Anschläge für ein Sperrelement der Verriegelungseinrichtung dienen, mit denen der Außenring an dem fahrzeugfesten Gehäuse des Überlagerungsgetriebes oder des Servomotors formschlüssig lösbar festgelegt werden kann.

Bevorzugte Ausführungen ergeben sich aus den Unteransprüchen.

Die erfindungsgemäße Überlagerungslenkung weist eine Vielzahl von konstruktiven Maßnahmen auf, den Schallleitungspfad in dem Überlagerungsgetriebe zu dessen Gehäuse zu unterbrechen, oder Maßnahmen, den hauptsächlichen Anteil der Schallleistung zu senken und in Frequenzbereiche zu verschieben, die von einem Fahrer eines Fahrzeugs nicht als störend empfunden werden, so wie etwa ein Geräusch eines Fahrmotors.

Es kann beispielsweise zweckmäßig sein, den exzentrischen Antriebskern des Wellgetriebes im axialen Bereich des Servomotors an dem Gehäuse und nicht auf der ersten Getriebeeingangswelle zu lagern, die aus dem Gehäuse in der Regel über eine Lenkwelle zu der Lenkhandhabe des Fahrzeugs führt.

Grundsätzlich wurde bei dem Entwurf der Überlagerungslenkung auf möglichste Kompaktheit des Überlagerungsgetriebes und des Servomotors und auf möglichst geringe Anzahl von formschlüssigen Verbindungen geachtet was günstige Auswirkungen auf die Eigenfrequenz der Komponenten und das Vermeiden von Resonanzerscheinungen der Überlagerungslenkung hat.

Der exzentrische Antriebskern ist daher bevorzugt einteilig mit einer Welle des Servomotors gebildet, der bevorzugt als elektrischer Hohlwellenmotor gebildet ist und von der ersten Getriebeeingangswelle durchragt ist.

In einem besonders bevorzugten Ausführungsbeispiel der Überlagerungslenkung ist ein massiver Motorlagerschild des Servomotors einteilig mit einer Gehäusehälfte des Gehäuses des Uberlagerungsgetriebes und Servomotors gebildet.

An dem Motorlagerschild ist ein Schwenklager des Servomotors zur Festlegung beispielsweise an einer Lenksäule angeordnet. Die erste Getriebeeingangswelle ist an einem Festlager an dem Gehäuse festgelegt und mit einem Loslager an der Getriebeausgangswelle festgelegt, die drehfest mit einem Stützring des Wellgetriebes verbunden ist. Das Gehäuse selbst ist mit geringsten Hohlräumen in seinem Inneren sehr kompakt gebaut und besteht vorzugsweise aus zwei Gehäusehälften mit einem Deckel und ist von einer einzigen, aus Schraubbolzen gebildeten Schraubverbindung zusammengehalten. Ein Führungsrohr für die Lenkwelle ist an einer Gehäusehälfte, die den Servomotor birgt, festgelegt.

Das in den Außenring einrastbare Sperrelement der Verriegelungseinrichtung ist in einer elastisch nachgiebigen Führung in dem Gehäuse gehalten und ein Motorlagesensor und ein Indexsensor, dessen Signale bei der Ansteuerung des Sperrelements bedeutsam sind, ist in einem einzigen Einschubmodul oder Stecker in dem Gehäuse festgelegt.

Die Erfindung wird nun näher anhand eines Ausführungsbeispiels beschrieben und anhand der beiliegenden Zeichnungen wiedergegeben.
- Fig. 1: zeigt einen Längsschnitt durch ein Überlagerungsgetriebe mit Lenkwelle einer elektrischen Servolenkung,
- Fig. 2: zeigt einen Querschnitt durch das Überlagerungsgetriebe in Fig. 1 im Bereich dessen Verriegelungseinrichtung,
- Fig. 3: zeigt einen weiteren Längsschnitt durch das Überlagerungsgetriebe in Fig. 1.

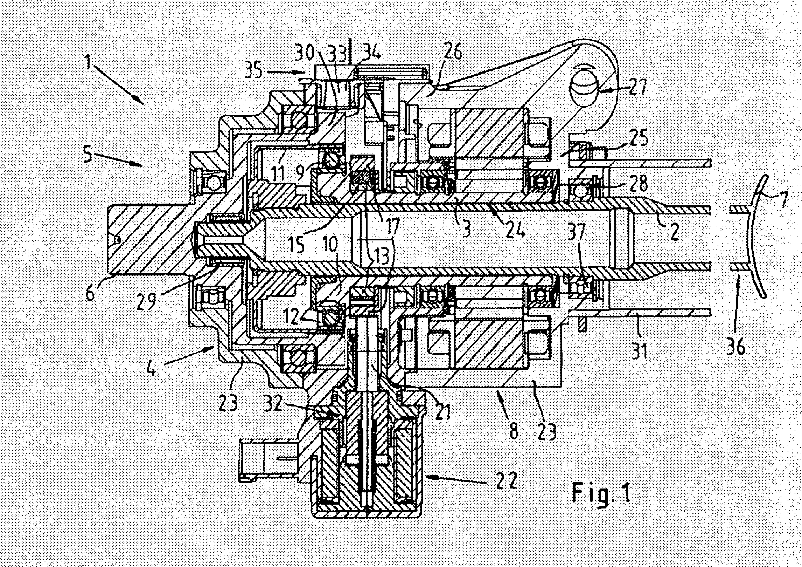

In Fig. 1 ist in einem Längsschnitt eine als Active Steering ausgebildete Überlagerungslenkung 1 für einen Personenkraftwagen gezeigt. Sie besteht aus einem als elektrischen Hohlwellenmotor ausgebildeten Servomotor 8, der sich an einem fahrzeugfesten Bauteil über ein Schwenklager 27 an seinem Motorlagerschild 25 abstützt. Eine Lenkwelle 36, die drehfest mit einer Lenkhandhabe 7 verbunden ist, wobei die Lenkwelle 36 in einem Lenkwellenführungsrohr 31 geführt ist, das an dem Motorlagerschild 25 festgelegt ist, bildet eine erste Getriebeeingangswelle 2 für ein zu der Überlagerungslenkung 1 gehöriges Überlagerungsgetriebe 5, das als Wellgetriebe 4 gebildet ist. Das Motorlagerschild 25 ist Teil einer Gehäusehälfte 26 eines Gehäuses 23 das das Überlagerungsgetriebe 5 und den Servomotor 8 in kompaktester Weise umschließt. Das Wellgetriebe 4 dient zur Überlagerung eines auf die erste Getriebeeingangswelle 2 aufgebrachten Lenkwinkels mit einem, von dem Servomotor 8 auf eine zweite Getriebeeingangswelle 3 aufgebrachten Drehwinkel. Die zweite Getriebeeingangswelle 3 wird von einer als Hohlwelle gebildeten Welle 24 des Servomotors 8 gebildet, auf der Rotormagnete des Servomotors 8 festgelegt sind. Zur Unterbrechung eines Schallpfads von der Hohlwelle auf die erste Getriebeeingangswelle 2 ist die Hohlwelle, die die erste Getriebeeingangswelle 2 umschließt, in Wälzlagern 37 an dem Gehäuse 23 im axialen Bereich des Servomotors 8 gelagert.

Die Hohlwelle ist einstückig mit einem exzentrischen Antriebskern 10 gebildet. Um den ellipsenförmigen Umfang des exzentrischen Antriebskerns 10 ist ein flexibles Kugellager 9 aufgezogen. Der exzentrische Antriebskern 10 greift mit seiner axialen Erstreckung in eine aus elastischem Stahlblech gebildete, topfförmige, radialflexible Abrollbuchse 11 ein. Die radialflexible Abrollbuchse 11 greift unter Wirkung der ellipsenförmigen Aufweitung durch den exzentrischen Antriebskern 10 mit einer Außenverzahnung in an sich bekannter Weise in eine Innenverzahnung an einem drehfest mit einer Getriebeausgangswelle 6 als Überlagerungsgetriebe 5 verbundenen Stützring 30 ein. Der Stützring 30, die Getriebeeingangswellen 2, 3 und die Getriebeausgangswelle 6 sind konzentrisch angeordnet. Der innenverzahnte Stützring 30 weist eine größere Zähnezahl auf als die radialflexible Abrollbuchse 11, wodurch eine Verdrehung des Stützrings 30 und damit der Getriebeausgangswelle 6 relativ zu der ersten Getriebeeingangswelle 2 pro Umdrehung des exzentrischen Antriebskern 10 um die Differenz der Zähnezahl erfolgt. Die erste Getriebeingangswelle 2 und die radialflexible Abrollbuchse 11 sind drehfest verbunden. Zur Dämmung des Betriebsgeräusches des Überlagerungsgetriebes 5 ist das flexible Kugellager 9 mit flexiblen, ringförmigen Geräuschdämpfungselementen 12 axial abgedeckt.

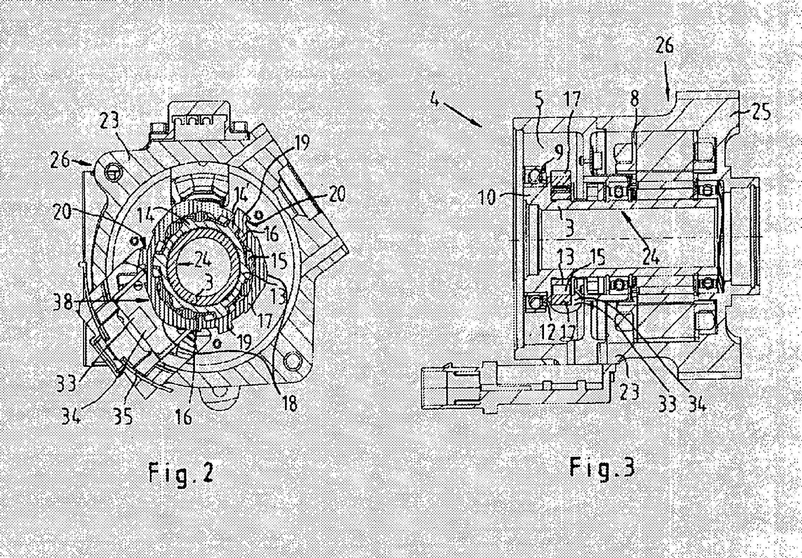

Um bei einer Fehlfunktion oder bei einem Ausfall des Servomotors 8 zu verhindern, dass die den Rotor bildende Hohlwelle dreht und somit eine Übertragung eines Drehwinkels der ersten Getriebeeingangswelle 2 und der Lenkhandhabe 7 über die radialflexible Abrollbuchse 11 auf den Stützring 30 und die Getriebeausgangswelle 6 gänzlich unmöglich gemacht und das Fahrzeug nicht steuerbar ist, ist eine elektromechanische Verriegelungseinrichtung 22, wie sie in Fig. 1 und Fig. 2 gezeigt ist, zur formschlüssigen Festlegung der zweiten Getriebeeingangswelle 3 an das Gehäuse 23 vorgesehen.

Die Verriegelungseinrichtung 22 ist aus einem Innenring 13, der mit Hilfe einer Kerbzahnwellenverbindung auf der zweiten Getriebeeingangswelle 3 oder der Hohlwelle festgelegt ist, einem Außenring 17 der den Innenring 13 radial umgibt und einen dazwischen angeordneten Geräuschdämpfungselement 15 mit elastomeren Eigenschaften gebildet. Der Innenring weist mit 120° Versatz zueinander im Wechsel je drei stiftförmige Vorsprünge 14' und je drei höckerförmige Vorsprünge 14 auf, die in insgesamt sechs Ausnehmungen 16 des Außenrings 17 eingreifen. Das Geräuschdämpfungselement 15 mit elastomeren Eigenschaften dient zur Schwingungsentkoppelung und zur Schaffung einer definierten Verdrehmöglichkeit des Innenrings 13 relativ zu dem Außenring 17. Es umgibt alle tangentialen Ausschlagflächen der Vorsprünge 14, 14' zu dem Außenring 17 hin.

Der Außenring 17 weist in dem in Fig. 2 gezeigten Ausführungsbeispiel in seiner radial äußeren Umfangsfläche 38 drei taschenartige Vertiefungen 18 auf, in deren Mitte je ein Vorsprung 19, der als Anschlag 20 für ein axialbeweglich gelagertes Sperrelement 21 der Verriegelungseinrichtung 22 dient. Das Sperrelement 21 ist zur Schwingungsentkoppelung mit dem Gehäuse 23 in einer elastischen Führung 32 gehalten. Ein Rotorlagesensor 33 und ein Indexsensor 34 sind in einem einzigen Einschubstecker 35 zusammengefasst (vgl. Fig. 3). Der Einschubstecker 35 ist radial in das Gehäuse 23 gesteckt und vollständig darin untergebracht, was die Schallabstrahlfläche der Überlagerungslenkung 1 verringert und Hohlräume in dem Gehäuse 23 minimiert.

Zum kompakten Aufbau der Überlagerungslenkung 1 trägt auch bei, dass ein Festlager 28 der ersten Getriebeeingangswelle 2 in dem Gehäuse 23 angeordnet ist und ein Loslager 29 in der Getriebeausgangswelle 6 als Nadellager angeordnet ist.

## Patentansprüche

1. Überlagerungslenkung für ein Fahrzeug, insbesondere für eine Servo- oder Hilfskraftlenkung eines Kraftfahrzeugs, mit einem, eine erste Getriebeeingangswelle (2) und eine zweite Getriebeeingangswelle (3) aufweisenden, als Wellgetriebe (4) ausgebildeten Überlagerungsgetriebe (5) zur Überlagerung der an beiden Getriebeeingangswellen (2, 3) auftretenden Drehwinkeln auf eine Getriebeausgangswelle (6) des Überlagerungsgetriebes (5), wobei die erste Getriebeeingangswelle (2) mit einer Lenkhandhabe (7) wirkverbunden ist und die zweite Getriebeeingangswelle (3) mit einem Servomotor (8) wirkverbunden ist, wobei ein flexibles Kugellager (9), zwischen einem exzentrischen Antriebskern (10) und einer radialflexiblen Abrollbuchse (11) des Wellgetriebes (4) angeordnet ist, **dadurch gekennzeichnet, dass** das flexible Kugellager (9) durch ein flexibles Geräuschdämpfungselement (12) axial abgedeckt ist und die zweite Getriebeeingangswelle (3) einen Bund aufweist oder mit einem Innenring (13) drehfest verbunden ist, der einen oder mehrere radiale und/oder axiale Vorsprünge (14) trägt, die unter Zwischenlage eines Geräuschdämpfungselements (15) mit elastomeren Eigenschaften in eine oder mehrere Ausnehmungen (16) eines Außenringes (17) eingreifen und der Außenring (17) an seinem radialen und/oder axialen Umfang taschenartige Vertiefungen (18) mit ein oder mehreren Vorsprüngen (19) aufweist, die als Anschläge (20) für ein Sperrelement (21) einer Verriegelungseinrichtung (22) dienen, mit denen der Außenring (17) an einem fahrzeugfesten Gehäuse (23) des Wellgetriebes (4) oder des Servomotors (8) formschlüssig lösbar festgelegt ist.

2. Überlagerungslenkung nach Anspruch 1, **dadurch gekennzeichnet, dass** der exzentrische Antriebskern (10) des Wellgetriebes (4) im axialen Bereich des Servomotors (8) an dem Gehäuse (23) gelagert ist.

3. Überlagerungslenkung nach einem der Ansprüche 1 oder 2, **dadurch gekennzeichnet, dass** der exzentrische Antriebskern (10) einteilig mit einer Welle (24) des Servomotors (8) gebildet ist, die die zweite Getriebeeingangswelle (3) des Überlagerungsgetriebes (5) bildet.

4. Überlagerungslenkung nach einem der Ansprüche 1 bis 3, **dadurch gekennzeichnet, dass** ein Motorlagerschild (25) des Servomotors (8) einteilig mit einer Gehäusehälfte (26) des Gehäuses (23) von Überlagerungsgetriebe (5) und Servomotor (8) gebildet ist.

5. Überlagerungslenkung nach einem der Ansprüche 1 bis 4, **dadurch gekennzeichnet, dass** ein Schwenklager (27) des Servomotors (8) und des Überlagerungsgetriebes (5) in dem Gehäuse (23) angeordnet ist.

6. Überlagerungslenkung nach einem der Ansprüche 1 bis 5, **dadurch gekennzeichnet, dass** ein Festlager (28) der ersten Getriebeeingangswelle (2) in dem Gehäuse (23) angeordnet ist.

7. Überlagerungslenkung nach einem der Ansprüche 1 bis 6, **dadurch gekennzeichnet, dass** ein Loslager (29) der ersten Getriebeeingangswelle (2) in der Getriebeausgangswelle (6), die drehfest in einem Stützring (30) des Wellgetriebes (4) verbunden ist, angeordnet ist.

8. Überlagerungslenkung nach einem der Ansprüche 1 bis 7, **dadurch gekennzeichnet, dass** das Gehäuse (23) dreiteilig ist und mit einer Schraubverbindung zusammengehalten ist.

9. Überlagerungslenkung nach einem der Ansprüche 1 bis 8, **dadurch gekennzeichnet, dass** ein Lenkwellenführungsrohr (31) an dem Gehäuse (23) festgelegt ist.

10. Überlagerungslenkung nach einem der Ansprüche 1 bis 9, **dadurch gekennzeichnet, dass** das Sperrelement (21) der Verriegelungseinrichtung (22) an dem Gehäuse (23) in einer elastischen Führung (32) gehalten ist.

11. Überlagerungslenkung nach einem der Ansprüche 1 bis 10, **dadurch gekennzeichnet, dass** ein Rotorlagesensor (33) und ein Indexsensor (34) in einem Einschubstecker (35) in dem Gehäuse (23) angeordnet ist.

## Claims

1. Superimposed steering system for a vehicle, in particular for a power steering system or a power assistance system of a motor vehicle, having a variable-ratio gear unit (5) which has a first gear-unit input shaft (2) and a second gear-unit input shaft (3) and is configured as a harmonic drive (4) for superimposing the rotational angles which occur on both gear-unit input shafts (2, 3) onto a gear-unit output shaft (6) of the variable-ratio gear unit (5), the first gear-unit input shaft (2) being operatively connected to a steering handle (7) and the second gear-unit input shaft (3) being operatively connected to a servomotor (8), a flexible ball bearing (9) being arranged between an eccentric drive core (10) and a radially flexible flexspline (11) of the harmonic drive (4), **characterized in that** the flexible ball bearing (9) is covered axially by a flexible noise damping element (12) and the second gear-unit input shaft (3) has a collar or is connected fixedly in terms of rotation to an inner ring (13) which carries one or more radial and/or axial projections (14) which, with the interposition of a noise damping element (15) having elastomeric properties, engage/engages into one or more recesses (16) of an outer ring (17), and the outer ring (17) has pocket-like depressions (18) with one or more projections (19) on its radial and/or axial circumference which serve as stops (20) for a locking element (21) of a latching device (22), by way of which stops (20) the outer ring (17) is fixed in a positive and releasable manner to a housing (23) of the harmonic drive (4) or of the servomotor (8), which housing (23) is fixed to the vehicle.

2. Superimposed steering system according to Claim 1, **characterized in that** the eccentric drive core (10) of the harmonic drive (4) is mounted on the housing (23) in the axial region of the servomotor (8).

3. Superimposed steering system according to either of Claims 1 and 2, **characterized in that** the eccentric drive core (10) is formed integrally with a shaft (24) of the servomotor (8), which shaft (24) forms the second gear-unit input shaft (3) of the variable-ratio gear unit (5).

4. Superimposed steering system according to one of Claims 1 to 3, **characterized in that** an engine bearing plate (25) of the servomotor (8) is formed integrally with a housing half (26) of the housing (23) of variable-ratio gear unit (5) and servomotor (8).

5. Superimposed steering system according to one of Claims 1 to 4, **characterized in that** a pivoting bearing (27) of the servomotor (8) and of the variable-ratio gear unit (5) is arranged in the housing (23).

6. Superimposed steering system according to one of Claims 1 to 5, **characterized in that** a locating bearing (28) of the first gear-unit input shaft (2) is arranged in the housing (23).

7. Superimposed steering system according to one of Claims 1 to 6, **characterized in that** a floating bearing (29) of the first gear-unit input shaft (2) is arranged in the gear-unit output shaft (6) which is connected fixedly in terms of rotation in a supporting ring (30) of the harmonic drive (4).

8. Superimposed steering system according to one of Claims 1 to 7, **characterized in that** the housing (23) is in three pieces and is held together by way of a screw connection.

9. Superimposed steering system according to one of Claims 1 to 8, **characterized in that** a steering-shaft guide tube (31) is fixed on the housing (23).

10. Superimposed steering system according to one of Claims 1 to 9, **characterized in that** the locking element (21) of the latching device (22) is held on the housing (23) in an elastic guide (32).

11. Superimposed steering system according to one of Claims 1 to 10, **characterized in that** a rotor position sensor (33) and an index sensor (34) are arranged in a push-in plug (35) in the housing (23).

## Revendications

1. Direction à superposition pour un véhicule, notamment pour une servodirection ou une direction assistée d'un véhicule automobile, comprenant une transmission à superposition (5) présentant un premier arbre d'entrée de boîte de vitesses (2) et un deuxième arbre d'entrée de boîte de vitesses (3), réalisée sous forme de transmission harmonique (4) pour superposer les angles de rotation survenant au niveau des deux arbres d'entrée de boîte de vitesses (2, 3) à un arbre de sortie de boîte de vitesses (6) de l'organe de transmission à superposition (5), le premier arbre d'entrée de boîte de vitesses (2) étant en liaison fonctionnelle avec un système de direction (7) et le deuxième arbre d'entrée de boîte de vitesses (3) étant en liaison fonctionnelle avec un servomoteur (8), un roulement à billes flexible (9) étant disposé entre un noyau d'entraînement excentrique (10) et une douille de roulement radialement flexible (11) de la transmission harmonique (4), **caractérisée en ce que** le roulement à billes flexible (9) est recouvert axialement par un élément d'amortissement des bruits flexible (12) et le deuxième arbre d'entrée de boîte de vitesses (3) présente un épaulement ou est connecté de manière solidaire en rotation à une bague interne (13), qui porte une ou plusieurs saillies (14) radiales et/ou axiales, qui viennent en prise dans un ou plusieurs évidements (16) d'une bague externe (17) en interposant un élément d'amortissement des bruits (15) ayant des propriétés élastomères, et la bague externe (17) présente sur sa périphérie radiale et/ou axiale des renfoncements (18) en forme de poche avec une ou plusieurs saillies (19) qui servent de butées (20) pour un élément de blocage (21) d'un dispositif de verrouillage (22), lesquelles permettent de fixer de manière amovible et par engagement par correspondance géométrique la bague externe (17) sur un boîtier (23) fixé au véhicule de la transmission harmonique (4) ou du servomoteur (8).

2. Direction à superposition selon la revendication 1, **caractérisée en ce que** le noyau d'entraînement excentrique (10) de la transmission harmonique (4) est monté sur le boîtier (23) dans la région axiale du servomoteur (8).

3. Direction à superposition selon l'une quelconque des revendications 1 ou 2, **caractérisée en ce que** le noyau d'entraînement excentrique (10) est réalisé d'une seule pièce avec un arbre (24) du servomoteur (8), qui forme le deuxième arbre d'entrée de boîte de vitesses (3) de la transmission à superposition (5).

4. Direction à superposition selon l'une quelconque des revendications 1 à 3, **caractérisée en ce qu'**un panneau de support de moteur (25) du servomoteur (8) est réalisé d'une seule pièce avec une moitié de boîtier (26) du boîtier (23) de la transmission à superposition (5) et du servomoteur (8).

5. Direction à superposition selon l'une quelconque des revendications 1 à 4, **caractérisée en ce qu'**un palier pivotant (27) du servomoteur (8) et de la transmission à superposition (5) est disposé dans le boîtier (23).

6. Direction à superposition selon l'une quelconque des revendications 1 à 5, **caractérisée en ce qu'**un palier fixe (28) du premier arbre d'entrée de boîte de vitesses (2) est disposé dans le boîtier (23).

7. Direction à superposition selon l'une quelconque des revendications 1 à 6, **caractérisée en ce qu'**un palier libre (29) du premier arbre d'entrée de boîte de vitesses (2) est disposé dans l'arbre de sortie de la boîte de vitesses (6), qui est connecté de manière solidaire en rotation dans une bague de support (30) de la transmission harmonique (4).

8. Direction à superposition selon l'une quelconque des revendications 1 à 7, **caractérisée en ce que** le boîtier (23) est en trois parties et est maintenu assemblé au moyen d'un assemblage vissé.

9. Direction à superposition selon l'une quelconque des revendications 1 à 8, **caractérisée en ce qu'**un tube de guidage de l'arbre de direction (31) est fixé sur le boîtier (23).

10. Direction à superposition selon l'une quelconque des revendications 1 à 9, **caractérisée en ce que** l'élément de blocage (21) du dispositif de verrouillage (22) est maintenu sur le boîtier (23) dans un guide élastique (32).

11. Direction à superposition selon l'une quelconque des revendications 1 à 10, **caractérisée en ce qu'**un capteur de position du rotor (33) et un capteur d'indice (34) sont disposés dans un connecteur enfichable (35) dans le boîtier (23).
